# EUROPEAN PATENT APPLICATION

(11) **EP 4 622 324 A1**
(43) Date of publication of application: **24.09.2025**
(21) Application number: 22965459.5
(22) Date of filing: 15.11.2022
(51) Int. Cl.: H04W 24/04, H04W 76/19

(54) **PROCESSING METHOD AND APPARATUS AFTER CONNECTION FAILURE, AND TERMINAL DEVICE AND NETWORK-SIDE DEVICE**

(71) Applicant: Beijing Xiaomi Mobile Software Co., Ltd., Beijing 100085 (CN)
(72) Inventor: WU, Yumin, Beijing 100085 (CN); LUO, Xingyi, Beijing 100085 (CN)
(74) Representative: Gunzelmann, Rainer
(86) International application number: PCT/CN2022/132101
(87) International publication number: WO 2024/103268

(57) **Abstract**

A processing method and apparatus after a connection failure, and a terminal device and a network-side device. The method comprises: in response to an SCG connection failure, executing an SCG connection failure processing operation according to a network configuration or a protocol specification. In the present disclosure, an SCG connection failure processing operation is executed after an SCG connection failure is detected, such that interruption and packet loss during a data transceiving process can be reduced.

## Description

### TECHNICAL FIELD

The disclosure relates to a field of communication technology, in particular to a processing method after connection failure, a processing apparatus after connection failure, a terminal and a network device.

### BACKGROUND

Dual connectivity (DC) means that a user equipment (UE) can establish connections in two cell groups simultaneously, namely, a master cell group (MCG) and a secondary cell group (SCG). The MCG includes a primary cell (PCell) and one or more secondary cells (SCells), and the SCG includes a primary secondary Cell (PSCell) and one or more SCells. The PCell and PSCell are collectively referred to as special cell (SpCell). Currently, how to deal with a SCG connection failure of a terminal has not been determined in related arts.

### SUMMARY

In order to overcome problems in related arts, the disclosure provides a processing method after connection failure, a processing apparatus after connection failure, a terminal and a network device.

According to a first aspect of embodiments of the disclosure, a processing method after connection failure, performed by a terminal, is provided. The method includes:
in response to a SCG connection failure, performing a SCG connection failure processing operation according to a network configuration or a protocol.

According to a second aspect of embodiments of the disclosure, a processing method after connection failure, performed by a network device, is provided. The method includes:
sending a network configuration to a terminal, in which the network configuration is used for performing a SCG connection failure processing operation in a case of a SCG connection failure of the terminal.

According to a third aspect of embodiments of the disclosure, a processing apparatus after connection failure, applied to a terminal, is provided. The apparatus includes:
a failure processing module, configured to, in response to a SCG connection failure, perform a SCG connection failure processing operation according to a network configuration or a protocol.

According to a fourth aspect of embodiments of the disclosure, a processing apparatus after connection failure, applied to a network device, is provided. The apparatus includes:
a sending module, configured to send a network configuration to a terminal, in which the network configuration is used for performing a SCG connection failure processing operation in a case of a SCG connection failure of the terminal.

According to a fifth aspect of embodiments of the disclosure, a terminal is provided. The terminal includes:
a first processor; and
a first memory for storing instructions executable by the first processor;
in which the first processor is configured to execute the executable instructions to implement the method of the first aspect.

According to a sixth aspect of embodiments of the disclosure, a network device is provided. The network device includes:
a second processor; and
a second memory for storing instructions executable by the second processor;
in which the second processor is configured to execute the executable instructions to implement the method of the second aspect.

According to a seventh aspect of embodiments of the disclosure, a computer readable storage medium having computer program instructions stored thereon is provided. When the computer program instructions are executed by a processor, the steps of the method described in the first aspect or the method described in the second aspect of the disclosure are implemented.

The technical scheme provided by the embodiments of the disclosure includes the following beneficial effects. In response to determining a SCG connection failure, the disclosure can perform a SCG connection failure processing operation according to a network configuration or a protocol, to reduce interruptions and packet losses during data transmission and reception.

It is understood that the foregoing general description and the following detailed description are exemplary and explanatory only and do not limit the disclosure.

### BRIEF DESCRIPTION OF THE DRAWINGS

Above and/or additional aspects and advantages of the disclosure will become apparent and more readily appreciated from the following descriptions made with reference to the accompanying drawings, in which:
FIG. 1 illustrates an application scenario in which a processing method after connection failure is applied according to some embodiments.
FIG. 2 is a flowchart illustrating a processing method after connection failure according to some embodiments.
FIG. 3 is a flowchart illustrating a processing method after connection failure according to some further embodiments.
FIG. 4 illustrates a communication sequence diagram of a processing method after connection failure according to some further embodiments.
FIG. 5 is a flowchart illustrating a processing method after connection failure according to some further embodiments.
FIG. 6 is a flowchart illustrating a processing method after connection failure according to some further embodiments.
FIG. 7 is a flowchart illustrating a processing method after connection failure according to some further embodiments.
FIG. 8 is a flowchart illustrating a processing method after connection failure according to some further embodiments.
FIG. 9 is a flowchart illustrating a processing method after connection failure according to some further embodiments.
FIG. 10 is a flowchart illustrating a processing method after connection failure according to some further embodiments.
FIG. 11 is a flowchart illustrating a processing method after connection failure according to some further embodiments.
FIG. 12 is a flowchart illustrating a processing method after connection failure according to some further embodiments.
FIG. 13 is a flowchart illustrating a processing method after connection failure according to some further embodiments.
FIG. 14 is a flowchart illustrating a processing method after connection failure according to some embodiments.
FIG. 15 is a block diagram illustrating a processing apparatus after connection failure according to some embodiments.
FIG. 16 is a block diagram illustrating another processing apparatus after connection failure according to some embodiments.
FIG. 17 is a block diagram illustrating a terminal according to some embodiments.
FIG. 18 is a block diagram illustrating a network device according to some embodiments.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the disclosure as recited in the attached claims.

To facilitate understanding of embodiments of the disclosure, some terms used in the embodiments of the disclosure are explained below to facilitate those skilled in the art to understand.

### 1) Terminal

The terminals include devices that provide voices and/or data connectivity to users, including devices that provide voices to the users, devices that provide data connectivity to the users, and devices that provide voices and data connectivity to the users. For example, the terminal may include a handheld device with a wireless connection function or a processing device connected to a wireless modem. As an implementation, the terminal includes a UE, a wireless terminal, a mobile terminal, or a user device.

### 2) Network device

The network device, also known as a wireless access network device, is a device that connects a terminal to a wireless network. The network device includes an access network device, a core network device, and devices (e.g., servers) of service providers. For example, the network device includes, but is not limited to, a transmission and reception point (TRP), a base station (e.g., gNB), a radio network controller (RNC), a Node B(NB), a base station controller (BSC), a base transceiver station (BTS), a home evolved NB (HeNB), a home NB (HNB), and a baseband unit (BBU).

### 3) DC structure

DC structure is a network architecture. In the DC structure, a terminal in a connected state can maintain connections and communications with at least two different access network devices simultaneously, and can utilize wireless resources of the two different access network devices. One of the two different access network devices is a master node (main node (MN) or a primary node (PN)), and the other is a secondary node (SN). The MN and the SN are connected to the same core network device. Compared to the SN, the MN can provide a signaling control function to the terminal to access a network. A cell group on the MN side is a MCG, which includes one PCell and M SCells, where M≥0. A cell group on the SN side is SCG, which includes N SCells, where N≥0.

The PCell is a cell that the terminal initially accesses on the MN side. In the MCG, the PCell and the SCell work on different carriers and are combined by a carrier aggregation (CA) technology. Similarly, the PSCell is a cell that the terminal initially accesses on the SN side. The PSCell and the SCell in the SCG work on different carriers and are combined by the CA technology.

### 4) Dynamic cell change

In a 5th generation (5G) system, a network device may provide a plurality of candidate cells for a terminal, and controls the terminal to make changes in the plurality of candidate cells through a L1 signaling or a L2 signaling. The L1 signaling may be Downlink Control Information (DCI), and the L2 signaling may be a media access control control element (MAC CE) signaling. As an example, the plurality of candidate cells may include a candidate cell 1 and a candidate cell 2, and when the terminal is controlled to make changes in the plurality of candidate cells, the serving cell can be changed from the candidate cell 1 to the candidate cell 2. One serving cell may correspond to one or more candidate cells.

The terminal can make a cell change based on a preconfigured condition sent by the network device and a pre-configured cell corresponding to the preconfigured condition. This change process can be called a condition-triggered mobility process. In detail, if the preconfigured condition is met, the terminal in the disclosure can change the serving cell to the preconfigured cell. The condition-triggered mobility process may include conditional handover (CHO), conditional PSCell addition (CPA) and conditional PSCell change (CPC).

In addition, the terminal can make a cell change according to a network indication. In detail, if the pre-configured condition is met, the terminal can change configuration of a specific cell. For example, the terminal can change a PCell configuration from a candidate cell configuration 1 to a candidate cell configuration 2.

Currently, when the terminal makes a dynamic cell change, in a case of a SCG connection failure, it cannot perform a SCG recovery process, and it also cannot detect a SCG connection failure well.

In order to solve the above problems, the embodiments of the disclosure provide a processing method after connection failure, a processing apparatus after connection failure, a terminal and a network device, so as to reduce interruptions and packet losses during data transmission and reception.

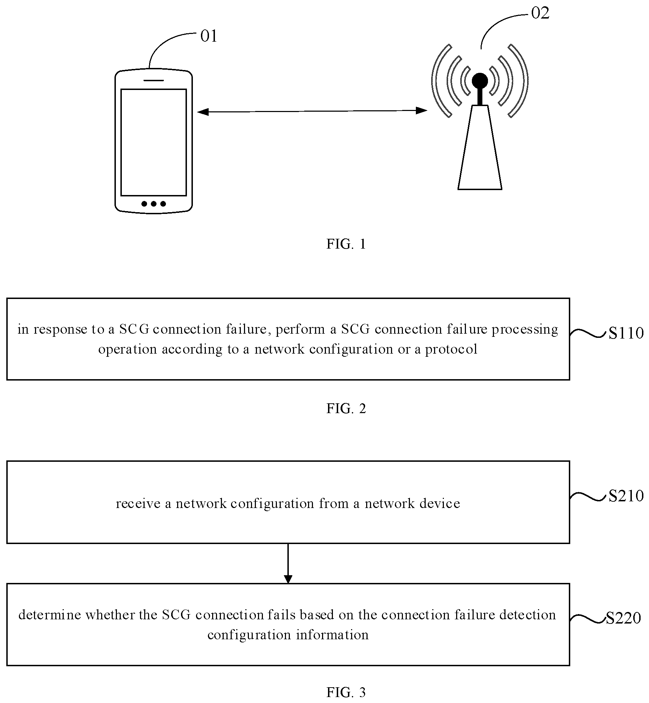

An application environment of a processing method after connection failure provided by the embodiments will be described below. As illustrated in FIG. 1, the application environment includes a terminal 01 and a network device 02. The terminal 01 and the network device 02 can be connected in a wired or wireless manner.

The terminal 01 may be a mobile station (MS) or a mobile terminal (MT). Specifically, the terminal 01 may be a mobile phone, a tablet computer or a computer with a wireless transceiver function, such as a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in smart city, a wireless terminal in smart home, an in-vehicle terminal, etc.

The network device 02 may include an access network device, a core network device, and devices (such as servers) of service providers, which is not limited here. The network device 02 is mainly used to realize functions of the terminal 01, such as resource scheduling, radio resource management and radio access control. Specifically, the network device 02 may be any one of a small base station, a wireless access point, a transmission and reception point (TRP), a transmission point (TP) and some other access nodes.

FIG. 2 is a flowchart illustrating a processing method after connection failure according to some embodiments. As illustrated in FIG. 2, the processing method after connection failure is performed by a terminal. The method includes the following step.

At step S110, in response to a SCG connection failure, a SCG connection failure processing operation is performed according to a network configuration or a protocol.

In some implementations, in response to a SCG connection failure, the terminal can perform a SCG connection failure processing operation according to a network configuration or a protocol. The network configuration may be sent to the terminal by the network device before a cell change. In addition, the protocol may be configuration information of the terminal before leaving the factory.

As an optional implementation, in response to detecting a SCG connection failure, the terminal can perform a SCG connection failure processing operation according to a network configuration or a protocol.

As a specific implementation, in response to a SCG connection failure, the terminal may send report information to the network device through a MCG. Optionally, the terminal may reestablish a SCG connection, i.e., perform SCG connection reestablishment.

It should be noted that before SCG connection, the terminal may receive one or more candidate cell configurations from the network device, which may be transmitted through an RRCReconfiguration message.

In some implementations, the network device can control the terminal to switch between a plurality of candidate cells through a signaling. That is, after receiving the signaling from the network device, the terminal can make a cell change based on one or more candidate cell configurations, i.e., make a change in the plurality of candidate cells according to the received signaling. The signaling may be a cell change indication, and the cell here may be a cell in the SCG.

As an example, after receiving the L1 signaling or the L2 signaling sent by the network device, the terminal may switch its cell according to one or more candidate cell configurations. For example, the terminal may change a working cell from a candidate cell 1 to a candidate cell 2.

In other implementations, if the trigger condition specified by the network configuration or the protocol is met, the terminal may change a serving cell configuration to a candidate cell configuration based on one or more candidate cell configurations. For example, when it is determined that measurement data meets an event A3 or an event A5, the terminal may change a serving MCG configuration to a candidate MCG configuration. Similar to the above, the candidate cell here may be a cell in the SCG.

It should be noted that a cell in the embodiment of the disclosure may also be a cell group. For example, when making a cell change, the terminal can change a working cell to a target cell. For another example, when making a cell change, the terminal can change a working cell group to a target cell group.

In other words, the cell in the embodiment of the disclosure may be a PSCell in a SCG, or any cell in the SCG. Therefore, SCG connection failure may be a PSCell connection failure in the SCG, or failing to connect with any cell in the SCG.

It should also be noted that a type of the SCG connection failure in the embodiment of the disclosure may include a radio link failure and a SCG change failure.

The embodiments of the disclosure stipulates that in response to determining a SCG connection failure, the disclosure can perform a SCG connection failure processing operation according to a network configuration or a protocol, to reduce interruptions and packet losses during data transmission and reception.

FIG. 3 is a flowchart illustrating a processing method after connection failure according to some further embodiments. As illustrated in FIG. 3, the processing method after connection failure is performed by a terminal. The method includes the following steps.

At step S210, a network configuration is received from a network device.

As an optional implementation, the terminal may receive a network configuration from a network device. The network configuration may include connection failure detection configuration information, which may be transmitted through a L1 signaling or a L2 signaling. The terminal may determine whether a SCG connection fails based on the connection failure detection configuration information, that is, executes step S220.

At step S220, it is determined whether the SCG connection fails based on the connection failure detection configuration information.

In some implementations, after receiving the connection failure detection configuration, the terminal may determine whether the SCG connection fails based on the connection failure detection configuration. As an example, the connection failure detection configuration may include a timer duration configuration for SCG change. If it is determined that the SCG connection fails, the terminal can perform the SCG connection failure processing operation. In addition, after determining that the SCG connection fails, the terminal may also record a SCG connection failure event or output a SCG connection failure prompt.

As another example, in an embodiment of the disclosure, it may also be determined whether the terminal successfully accesses a target SCG within an agreed duration, and if the terminal does not successfully access the target SCG within the agreed duration, it may be determined that the SCG connection fails.

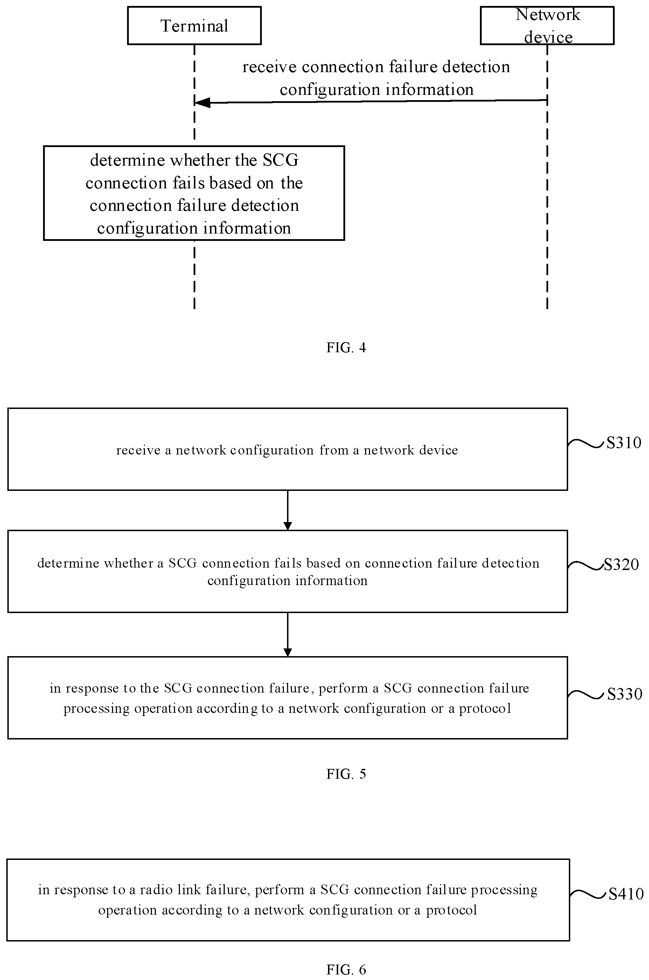

FIG. 4 illustrates a communication sequence diagram of a processing method after connection failure according to some further embodiments. As illustrated in FIG. 4, the terminal can receive connection failure detection configuration information from the network device, and then determine whether the SCG connection fails based on the connection failure detection configuration information.

It should be noted that for embodiments or features that are separated by "or", even if some features are unrealizable, it does not affect other schemes. In addition, without contradiction, the embodiment of the disclosure can be combined with other embodiments or implementations related to the processing method after connection failure applied to the terminal or other optional schemes thereof, which will not be repeated here.

The embodiment of the disclosure stipulates that in response to determining a SCG connection failure, the disclosure can perform a SCG connection failure processing operation according to a network configuration or a protocol, to reduce interruptions and packet losses during data reception and transmission. Alternatively, the embodiment of the disclosure can determine whether the SCG connection fails based on connection failure detection configuration information, to more accurately perform a subsequent process after the connection failure.

FIG. 5 is a flowchart illustrating a processing method after connection failure according to some further embodiments. As illustrated in FIG. 5, the processing method after connection failure is performed by a terminal. The method includes the following steps.

At step S310, a network configuration is received from a network device.

At step S320, it is determined whether a SCG connection fails based on connection failure detection configuration information.

Specific implementations of steps S310 and S320 have been described in detail in the above-mentioned embodiments, which will not be repeated here.

At step S330, in response to the SCG connection failure, a SCG connection failure processing operation is performed according to a network configuration or a protocol.

As an optional implementation, in an embodiment of the disclosure performs if it is determined that the SCG connection fails based on the connection failure detection configuration information, the SCG connection failure processing operation can be performed according to the network configuration or the protocol. That is, in response to the SCG connection failure, the terminal can perform the SCG connection failure processing operation according to the network configuration or the protocol.

In addition, if it is determined that the SCG connection is successful based on the connection failure detection configuration, the terminal can transmit data with the SCG that is successfully connected.

It should be noted that for embodiments or features that are separated by "or", even if some features are unrealizable, it does not affect other schemes. In addition, without contradiction, the embodiment of the disclosure can be combined with other embodiments or implementations related to the processing method after connection failure applied to the terminal or other optional schemes thereof, which will not be repeated here.

The embodiment of the disclosure stipulates that when it is determined that the SCG connection fails, the disclosure can perform the SCG connection failure processing operation according to the network configuration or the protocol, to reduce interruptions and packet losses during data reception and transmission. In addition, after determining the SCG connection failure based on the connection failure detection configuration information, the embodiment of the disclosure can process the SCG connection failure, to further reduce an interruption rate and a packet loss rate.

FIG. 6 is a flowchart illustrating a processing method after connection failure according to some further embodiments. As illustrated in FIG. 6, the processing method after connection failure is performed by a terminal. The method includes the following step.

At step S410, in response to a radio link failure, a SCG connection failure processing operation is performed according to a network configuration or a protocol.

In the embodiment of the disclosure, the radio link failure may include at least one of: a physical layer out-of-sync, a random access failure, a radio link control (RLC) layer reaching a maximum retransmission count or beam failure.

The physical layer out-of-sync is also called a physical layer failure, which may be an abnormality in which a signal quality of the physical layer is relatively poor and still has not improved when a timer t310 expires. The random access failure may be a random access failure of a MAC layer, such as reaching the maximum number of random access attempts. The RLC layer reaching the maximum retransmission count may be the RLC layer reaching the maximum number of retransmissions. The beam failure may be a beam failure detected by a beam failure detection mechanism, such as a beam failure counter reaching a specified threshold.

Optionally, the radio link failure may further include a radio resource control (RRC) connection configuration failure, an integrity detection failure, and exceeding a maximum uplink transmission timing difference. The RRC connection configuration failure may be that an RRC connection reconfiguration message received by the terminal exceeds a capability of the terminal, or the terminal cannot recognize the RRC configuration message. The integrity detection failure may be that an integrity detection corresponding to data or control information received by the terminal cannot be passed. The maximum uplink transmission timing difference is a difference of subframe boundaries for uplink transmission between a MCG and a SCG when a network configures synchronous DC.

As an optional implementation, in response to a radio link failure, the terminal performs a SCG connection failure processing operation according to a network configuration or a protocol. For example, in response to the radio link failure, the terminal reestablishes a SCG connection through a candidate SCG configuration.

It should be noted that for embodiments or features that are separated by "or", even if some features are unrealizable, it does not affect other schemes. In addition, without contradiction, the embodiment of the disclosure can be combined with other embodiments or implementations related to the processing method after connection failure applied to the terminal or other optional schemes thereof, which will not be repeated here.

The embodiment of the disclosure stipulates that when it is determined that the SCG connection fails, the disclosure can perform the SCG connection failure processing operation according to the network configuration or the protocol, to reduce interruptions and packet losses during data reception and transmission. In addition, in response to detecting the radio link failure, the embodiment of the disclosure performs the SCG connection failure processing operation according to the network configuration or the protocol, to more accurately perform processing after the connection failure, and improve a success rate of reestablishment.

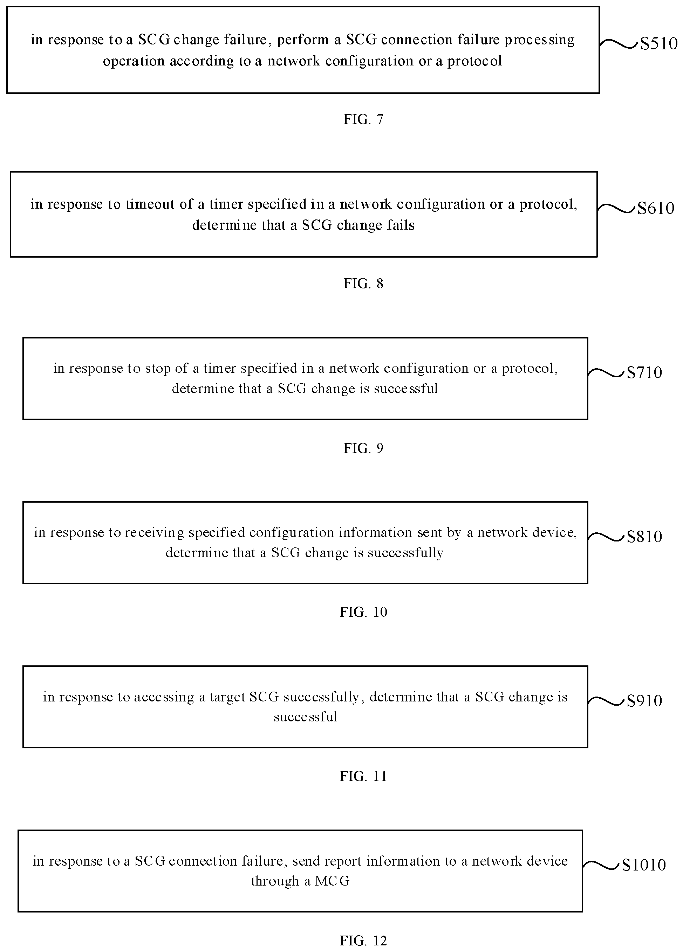

FIG. 7 is a flowchart illustrating a processing method after connection failure according to some embodiments. As illustrated in FIG. 7, the processing method after connection failure is performed by a terminal. The method includes the following step.

At step S510, in response to a SCG change failure, a SCG connection failure processing operation is performed according to a network configuration or a protocol.

In an embodiment of the disclosure, a type of the SCG change failure may include any one of: a change indication sent by the network device for making a change in a plurality of candidate cells, or a cell configuration change in a case of meeting the network configuration or the protocol. That is, the SCG change can be triggered by the change indication sent by the network device. For example, the SCG change may be triggered by DCI and/or a MAC CE.

Optionally, the SCG change can also be triggered by the terminal under the condition that the network configuration or the protocol is met, for example, in a case that the event A3 or the event A5 is met.

As an optional implementation, in response to a SCG change failure, the terminal can perform a SCG connection failure processing operation according to a network configuration or a protocol. For example, in response to the SCG change failure, the terminal can reestablish a SCG connection through a source SCG configuration.

It should be noted that for embodiments or features that are separated by "or", even if some features are unrealizable, it does not affect other schemes. In addition, without contradiction, the embodiment of the disclosure can be combined with other embodiments or implementations related to the processing method after connection failure applied to the terminal or other optional schemes thereof, which will not be repeated here.

The embodiment of the disclosure stipulates that when it is determined that the SCG connection fails, the disclosure can perform the SCG connection failure processing operation according to the network configuration or the protocol, to reduce interruptions and packet losses during data reception and transmission. In addition, in response to detecting the SCG change failure, the embodiment of the disclosure can perform the SCG connection failure processing operation according to the network configuration or the protocol, to more accurately perform processing after the connection failure, and improve a success rate of reestablishment.

FIG. 8 is a flowchart illustrating a processing method after connection failure according to some further embodiments. As illustrated in FIG. 8, the processing method after connection failure is performed by a terminal. The method includes the following step.

At step S610, in response to timeout of a timer specified in a network configuration or a protocol, it is determined that a SCG change fails.

In some implementations, the condition for the terminal to judge a SCG change failure may be timeout of a timer specified in the network configuration or the protocol. That is, if the terminal does not access a target SCG successfully within an agreed duration, it is determined that the SCG change fails. Therefore, in response to the timeout of the timer specified in the network configuration or the protocol, the embodiment of the disclosure can determine that the SCG change fails.

In an embodiment of the disclosure, the SCG change may include any one of: a SCG addition or changing a SCG configuration from a source SCG to a target SCG. The SCG addition may be the first time that the terminal adds a SCG configuration, that is, adds a new SCG. In some implementations, the SCG change may include a SCG configuration change or a SpCell configuration change in a SCG.

As an optional implementation, a starting condition of the timer includes any one of: receiving a change indication sent by the network device, and changing a SCG configuration based on the change indication; receiving the change indication sent by the network device, and sending feedback information to the network device, in which the feedback information is a feedback to the change indication; receiving the change indication sent by the network device, and releasing a source SCG; and a trigger condition specified in the network configuration or the protocol being met.

Specifically, the terminal can start the timer (that is, the timer starts counting) after receiving the change indication sent by the network device and changing a SCG configuration based on the change indication. As an example, the network device can configure a plurality of SCG configurations for the terminal through an RRC message. On the basis, the network device can indicate a target SCG configuration to be used by the terminal through a DCI message, a MAC CE message or an RRC message, and the terminal starts the timer after receiving the change indication, or can start the timer after changing the SCG.

Optionally, after receiving a change indication sent by the network device and changing a SCG configuration based on the change indication, the terminal sends feedback information to the change indication to the network device and then starts the timer, that is, the timer starts counting. The feedback information may include any one of: a hybrid automatic repeat-request (HARQ) feedback, a MAC CE feedback or an RRC message feedback.

As an example, the network device configures a plurality of SCG configurations for the terminal through an RRC message. On the basis, the network device can indicate a target SCG configuration to be used to the terminal through the DCI message, MAC CE message or RRC message. After receiving the change indication, the terminal can send feedback information to the change indication, and then starts a timer after sending the feedback information to the change indication.

In addition, the terminal can send the feedback information to a source SCG or a source MCG. That is, the network device here may be a source SCG or a source MCG. For example, the change indication sent by the network device can be sent by the source SCG or the source MCG, and the feedback information of the terminal can also be sent by the source SCG or the source MCG.

The change indication here is used to indicate a target SCG configuration in one or more pre-configured SCG configurations. In addition, the change indication is transmitted by a MAC CE message, a DCI message or an RRC message.

Optionally, after receiving the change indication sent by the network device and changing a SCG configuration based on the change indication, the terminal releases a source SCG and starts a timer, that is, the timer starts counting. As an example, the network device configures a plurality of SCG configurations for the terminal through an RRC message. On the basis, the network device can indicate a target SCG configuration to be used to the terminal through a DCI message, a MAC CE message or an RRC message. After receiving the change indication, the terminal can release a source SCG, that is, prepare to access a target SCG. After releasing the source SCG, the terminal can start the timer.

Optionally, the terminal can start a timer when the trigger condition specified in the network configuration or the protocol is met. As an example, the terminal may start the timer after determining that measurement data meets the event A3 or the event A5.

It should be noted that for embodiments or features that are separated by "or", even if some features are unrealizable, it does not affect other schemes. In addition, without contradiction, the embodiment of the disclosure can be combined with other embodiments or implementations related to the processing method after connection failure applied to the terminal or other optional schemes thereof, which will not be repeated here.

The embodiment of the disclosure stipulates that when it is determined that the SCG connection fails, the disclosure can perform the SCG connection failure processing operation according to the network configuration or the protocol, to reduce interruptions and packet losses during data reception and transmission. In addition, the embodiment of the disclosure determines that the SCG change fails when the timeout of the timer is detected, so that whether the SCG change fails is determined more simply and effectively.

FIG. 9 is a flowchart illustrating a processing method after connection failure according to some further embodiments. As illustrated in FIG. 9, the processing method after connection failure is performed by a terminal. The method includes the following step.

At step S710, in response to timeout of a timer specified in a network configuration or a protocol, it is determined that a SCG change is successful.

In an embodiment of the disclosure, the stop of the timer may indicate that the SCG change is successful. The stop condition of the timer may include any one of: receiving first configuration information sent by a network device; or accessing a target SCG successfully.

In some implementations, the terminal can determine whether the SCG change is successful based on the timer, and can determine that the SCG change is successful when the start condition of the timer is met and the timer stops before it expires. The specific implementation of the start condition has been described in detail in the above embodiments, and will not be repeated here.

It should be noted that for embodiments or features that are separated by "or", even if some features are unrealizable, it does not affect other schemes. In addition, without contradiction, the embodiment of the disclosure can be combined with other embodiments or implementations related to the processing method after connection failure applied to the terminal or other optional schemes thereof, which will not be repeated here.

The embodiment of the disclosure stipulates that when it is determined that the SCG connection fails, the disclosure can perform the SCG connection failure processing operation according to the network configuration or the protocol, to reduce interruptions and packet losses during data reception and transmission. In addition, the embodiment of the disclosure can determine that the SCG change is successful when it detects that the timer stops, so that whether the SCG change is successful can be determined more simply and effectively.

FIG. 10 is a flowchart illustrating a processing method after connection failure according to some further embodiments. As illustrated in FIG. 10, the processing method after connection failure is performed by a terminal. The method includes the following step.

At step S810, in response to receiving first configuration information sent by a network device, it is determined that a SCG change is successful.

In an embodiment of the disclosure, if the terminal receives the first configuration information sent by the network device, it can determine that the SCG change is successful. That is, in response to receiving the first configuration information sent by the network device, the terminal can determine that the SCG change is successful. The first configuration information includes any one of: a new target MCG configuration or a new SCG configuration, a SCG deletion indication, or an RRC connection release indication.

The new target MCG configuration may include switching configuration information for starting a MCG change. The new target SCG configuration may include SCG change configuration information for starting a SCG change. In addition, the target SCG in an embodiment of the disclosure may be a PSCell corresponding to the target SCG.

After receiving the SCG deletion indication, the terminal can perform a SCG deletion operation based on the SCG deletion indication. That is, the terminal can delete a SCG configuration corresponding to a source cell according to the SCG deletion indication. In addition, after receiving the RRC connection release indication, the terminal can also release an RRC connection based on the RRC connection release indication.

It should be noted that for embodiments or features that are separated by "or", even if some features are unrealizable, it does not affect other schemes. In addition, without contradiction, the embodiment of the disclosure can be combined with other embodiments or implementations related to the processing method after connection failure applied to the terminal or other optional schemes thereof, which will not be repeated here.

The embodiment of the disclosure stipulates that when it is determined that the SCG connection fails, the disclosure can perform the SCG connection failure processing operation according to the network configuration or the protocol, to reduce interruptions and packet losses during data reception and transmission. In addition, the embodiment of the disclosure determines that the SCG change is successful when the first configuration information sent by the network device is received, so that whether the SCG change is successful can be determined more accurately and effectively.

FIG. 11 is a flowchart illustrating a processing method after connection failure according to some further embodiments. As illustrated in FIG. 11, the processing method after connection failure is performed by a terminal. The method includes the following step.

At step S910, in response to accessing a target SCG successfully, it is determined that a SCG change is successful.

As an optional implementation, in an embodiment of the disclosure, if it is detected that the terminal has accessed the target SCG successfully, it is determined that the SCG change is successful. That is, in response to that the terminal has accessed the target SCG successfully, the terminal can determine that the SCG change is successful. The judgment condition for successfully accessing the target SCG include any one of: receiving feedback information sent by the network device indicating successful random access process; receiving feedback information sent by the network device indicating accessing the target SCG successfully; receiving a downlink data transmission sent by the network device; or receiving a new transmission scheduled by the network device. The new transmission scheduled by the network device may be a new data transmission in a HARQ process, which may correspond to a retransmission.

In an embodiment of the disclosure, the network device may be a target SCG. Similarly to the above embodiment, the target SCG here may also be a PSCell corresponding to the target SCG.

Specifically, if the terminal detects that its random access process in the target SCG is successful, it is determined that the terminal has successfully assessed the target SCG. For example, when terminal receives feedback information of the random access process and a contention is resolved, it is determined that the terminal has successfully assessed the target SCG. The feedback information may include an Msg4 or an MsgB. The Msg4 corresponds to a 4-step random access process, and the MsgB corresponds to a 2-step random access process.

Optionally, if the terminal receives the feedback information sent by the network device indicating accessing the target SCG successfully, it is determined that the terminal has successfully assessed the target SCG. For example, the network device can indicate the feedback information indicating successful access to the target SCG through a MAC CE message or an RRC message.

Optionally, if the terminal receives a downlink data transmission sent by a target SCG, it is determined that the terminal has accessed the target SCG successfully. The downlink transmission may be a downlink transmission indicated by an identifier of the terminal. For example, the downlink transmission may be indicated by a cell radio network temporary identifier (C-RNTI).

Optionally, if the terminal receives a new transmission scheduled by the network device, it determines that the terminal has accessed the target SCG successfully. The new transmission scheduled by network device includes at least one of: an uplink transmission and/or a downlink transmission, or a new transmission indicated by a terminal ID, such as a C-RNTI.

The new transmission scheduled by the network device may include a new data transmission in a HARQ process. In addition, the feedback information indicating successful random access process or the feedback information indicating accessing the target SCG successfully can be transmitted through a MAC CE or an RRC message. The MAC CE includes any one of: a MAC subheader; n bits of content in a first MAC packet data unit (PDU) sent by the terminal in a target cell; and n bits of content in predefined content.

Specifically, the MAC CE may be a MAC CE including only the MAC subheader. In addition, the MAC CE may include the n bits of content in the first MAC PDU sent by the terminal in the target cell. As an example, the content of the MAC CE may be 48 bits of content in the first MAC PDU sent by the terminal in the target cell.

Optionally, the MAC CE may also include the n bits of content in the predefined content. As an example, the content of the MAC CE may be 48 bits of content in the predefined content, and the bit value may be "0" or "1".

It should be noted that for embodiments or features that are separated by "or", even if some features are unrealizable, it does not affect other schemes. In addition, without contradiction, the embodiment of the disclosure can be combined with other embodiments or implementations related to the processing method after connection failure applied to the terminal or other optional schemes thereof, which will not be repeated here.

The embodiment of the disclosure stipulates that when it is determined that the SCG connection fails, the disclosure can perform the SCG connection failure processing operation according to the network configuration or the protocol, to reduce interruptions and packet losses during data reception and transmission. In addition, after successfully accessing the target SCG, the embodiment of the disclosure determines that the SCG change is successful, so that whether the SCG change is successful can be determined more accurately and effectively.

FIG. 12 is a flowchart illustrating a processing method after connection failure according to some further embodiments. As illustrated in FIG. 12, the processing method after connection failure is performed by a terminal. The method includes the following step.

At step S1010, in response to a SCG connection failure, report information is sent to a network device through a MCG.

In an embodiment of the disclosure, in response to the SCG connection failure, the terminal may send the report information to the network device through the MCG. The report information is used to inform the network device of the SCG connection failure. As an example, the terminal can report SCG connection failure information through a signaling radio bearer (SRB)1 of the MCG.

In addition, if the MCG is unavailable, the embodiment of the disclosure can perform a MCG connection restore operation. That is, in response to the MCG being unavailable, the terminal performs the MCG connection recovery operation. The MCG connection recovery operation may include any one of: an RRC connection reestablishment; reestablishment through a candidate MCG configuration, that is, the terminal can reestablish a connection through a candidate MCG configuration; and reestablishment through a source MCG configuration, that is, the terminal can reestablish a connection through a source MCG configuration.

In some implementations, the MCG connection failure is similar to the SCG connection failure, and may include any one of a radio link failure and a MCG change failure.

It should be noted that the embodiment of the disclosure may set a number of times of candidate cell configuration reestablishment, which may be specified by the network configuration or the protocol. As an example, the maximum number of times of candidate cell configuration reestablishment may be n, which is an integer, such as 1.

In an embodiment of the disclosure, the report information includes at least one of: a connection failure type; connection failure configuration indication information; connection failure cell indication; or connection failure cell group indication. The connection failure type may include a radio link failure and a SCG change failure. A SCG change type corresponding to the SCG change failure is "indicating a target SCG configuration in one or more pre-configured SCG configurations" for SCG change. The connection failure configuration indication information may include a configuration identifier of a candidate cell where connection failed. For example, if the terminal is configured with a plurality of candidate cells, the terminal may report configuration identifiers of cells in which connection failure occurs. The connection failure cell indication may include identifiers of candidate cells in which connection failure occurs. The connection failure cell group indication may be used to indicate a type of a cell group where connection failed. For example, the connection failure cell group indication may be used to indicate that the type of the cell group where connection failed is SCG.

It should be noted that for embodiments or features that are separated by "or", even if some features are unrealizable, it does not affect other schemes. In addition, without contradiction, the embodiment of the disclosure can be combined with other embodiments or implementations related to the processing method after connection failure applied to the terminal or other optional schemes thereof, which will not be repeated here.

The embodiment of the disclosure stipulates that when it is determined that the SCG connection fails, the disclosure can perform the SCG connection failure processing operation according to the network configuration or the protocol, to reduce interruptions and packet losses during data reception and transmission. In addition, in the case of SCG connection failure, the embodiment of the disclosure can send the report information through the MCG, which can further reduce an interruption rate and a packet loss rate during data reception and transmission.

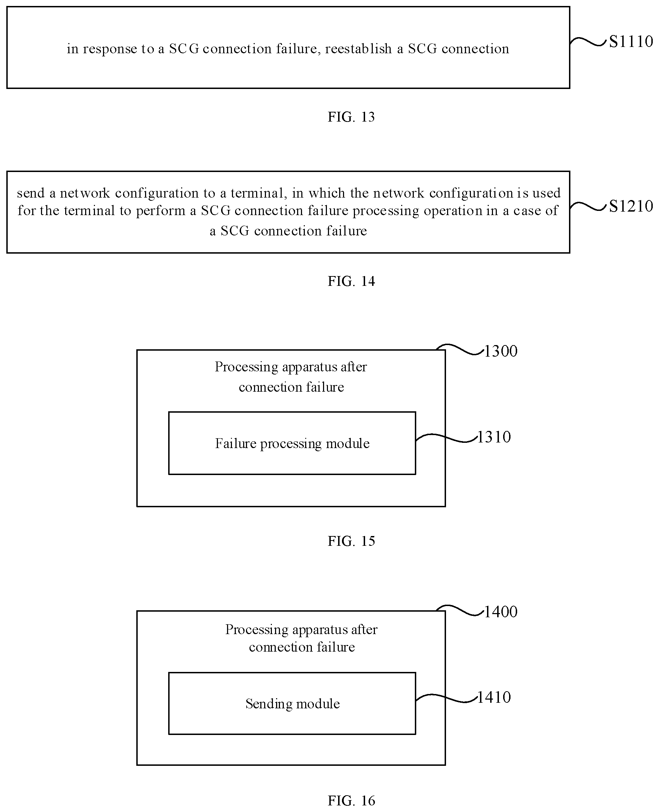

FIG. 13 is a flowchart illustrating a processing method after connection failure according to some further embodiments. As illustrated in FIG. 13, the processing method after connection failure is performed by a terminal. The method includes the following step.

At step S1110, in response to a SCG connection failure, a SCG connection is reestablished.

In an embodiment of the disclosure, in response to the SCG connection failure, the terminal can reestablish the SCG connection. That is, in response to detecting the SCG connection failure, the terminal can reestablish the SCG connection. In detail, the terminal can reestablish the SCG connection through a candidate SCG configuration. That is, the terminal can perform connection reestablishment through the candidate SCG configuration. In the process, the terminal can first obtain a type of the SCG connection failure. If the type of the SCG connection failure is a radio link failure, the terminal can reestablish the SCG connection through the candidate SCG configuration. This is mainly because that the radio link failure usually occurs at the time of change, in which case the link quality of the source SCG is poor, and in this case, if the connection is reestablished using the source SCG configuration, it is likely to lead to a failure of reestablishment. Therefore, if the type of the SCG connection failure is the radio link failure, the embodiment of the disclosure can reestablish the SCG connection through the candidate SCG configuration.

Optionally, the terminal can also reestablish the SCG connection through the source SCG configuration. That is, the terminal can reestablish the connection through the source SCG configuration. In the process, the terminal can first obtain the type of the SCG connection failure. If the type of the SCG connection failure is a SCG change failure, the terminal can reestablish the SCG connection through the source SCG configuration. This is mainly because that the SCG change is to disconnect or release the source SCG and initiate a connection with a target cell to access a new SCG. In the process of accessing the new SCG, if the SCG connection fails, the connection can be re-established through the previous configuration. That is, in the case that the type of the SCG connection failure is the SCG change failure, the SCG connection can be re-established through the source SCG configuration.

It should be noted that after reestablishing the SCG connection and successfully reestablishing the SCG, the terminal can also send the report information to the SCG where the connection is reestablished. The report information is similar to the report information sent by the MCG in the above embodiment, which will not be repeated here.

It should be noted that for embodiments or features that are separated by "or", even if some features are unrealizable, it does not affect other schemes. In addition, without contradiction, the embodiment of the disclosure can be combined with other embodiments or implementations related to the processing method after connection failure applied to the terminal or other optional schemes thereof, which will not be repeated here.

The embodiment of the disclosure stipulates that when it is determined that the SCG connection fails, the disclosure can perform the SCG connection failure processing operation according to the network configuration or the protocol, to reduce interruptions and packet losses during data reception and transmission. In addition, the embodiment of the disclosure can reestablish the SCG connection based on the type of the connection failure, to improve a success probability of reestablishment to some extent.

FIG. 14 is a flowchart illustrating a processing method after connection failure according to some embodiments. As illustrated in FIG. 14, the method is applied to a network device, and includes the following step.

At step S1210, a network configuration is sent to a terminal, in which the network configuration is used for the terminal to perform a SCG connection failure processing operation in a case of a SCG connection failure.

In an embodiment of the disclosure, the network configuration may include connection failure detection configuration information. The connection failure detection configuration information is used to assist the terminal in determining whether the SCG connection fails.

In some implementations, the network device can send a change indication to the terminal. The change indication may be used to indicate the terminal to perform a SCG change. That is, the change indication may be used to indicate a target SCG configuration in one or more pre-configured SCG configurations.

In other implementations, the network device can receive feedback information from the terminal. The feedback information may be a feedback to the change indication.

In other implementations, the network device can send first configuration information to the terminal. The first configuration information may include any one of: a new target MCG configuration or a new target SCG configuration, a SCG deletion indication, and an RRC connection release indication.

In other implementations, the network device can send feedback information to the terminal indicating successful random access process. Or, the network device can send feedback information to the terminal indicating successful access to a target SCG. Or, the network device can send a downlink data transmission to the terminal. Or, the network device can send a new transmission scheduled by the network device to the terminal.

It should be noted that for embodiments or features that are separated by "or", even if some features are unrealizable, it does not affect other schemes. In addition, without contradiction, the embodiment of the disclosure can be combined with other embodiments or implementations related to the processing method after connection failure applied to the terminal or other optional schemes thereof, which will not be repeated here.

In an embodiment of the disclosure, the network device can send the network configuration to the terminal. The network configuration can be used to perform the SCG connection failure processing operation in response to the SCG connection failure of the terminal, to reduce interruptions and packet losses during data transmission and reception.

FIG. 15 is a block diagram illustrating a processing apparatus 1300 after connection failure according to some embodiments. As illustrated in FIG. 15, the apparatus 1300 is applied to a terminal. The apparatus 1300 includes: a failure processing module 1310.

The failure processing module 1310 is configured to, in response to a SCG connection failure, perform a SCG connection failure processing operation according to a network configuration or a protocol.

In some implementations, the apparatus 1300 may further include:
a configuration receiving module, configured to receive the network configuration from a network device, in which the network configuration includes connection failure detection configuration information; and
a determining module, configured to determine whether the SCG connection fails based on the connection failure detection configuration information.

In some implementations, the SCG connection failure includes at least one of:
a radio link failure; or
a SCG change failure.

In some implementations, a condition of the SCG change failure includes timeout of a timer specified in the network configuration or the protocol.

In some implementations, a starting condition of the timer includes any one of:
receiving a change indication sent by the network device, and changing a SCG configuration based on the change indication;
receiving the change indication sent by the network device, and sending feedback information to the network device, in which the feedback information is a feedback to the change indication;
receiving the change indication sent by the network device, and releasing a source SCG; or
a trigger condition specified in the network configuration or the protocol being met.

In some implementations, the change indication is used to indicate a target SCG configuration in one or more pre-configured SCG configurations.

In some implementations, the feedback information includes at least one of a HARQ feedback, a MAC CE feedback or an RRC message feedback.

In some implementations, a stop of the timer indicates that a SCG change is successful, and a stop condition of the timer includes any one of:
receiving first configuration information sent by a network device; or
accessing a target SCG successfully.

In some implementations, the first configuration information includes any one of:
a new target MCG configuration or a new target SCG configuration;
a SCG deletion indication; or
an RRC connection release indication.

In some implementations, a judgment condition for accessing the target SCG successfully includes any one of:
receiving feedback information sent by the network device indicating successful random access process;
receiving feedback information sent by the network device indicating accessing the target SCG successfully;
receiving a downlink data transmission sent by the network device; or
receiving a new transmission scheduled by the network device.

In some implementations, the new transmission scheduled by the network device includes at least one of:
an uplink transmission and/or a downlink transmission; or
a new transmission indicated by an identifier of the terminal.

In some implementations, the new transmission scheduled by the network device includes a new data transmission in a HARQ process.

In some implementations, the feedback information indicating successful random access process or the feedback information indicating accessing the target SCG successfully is transmitted through a MAC CE or an RRC message.

In some implementations, the MAC CE includes any one of:
a MAC subheader;
n bits of content in a first MAC PDU sent by the terminal in a target cell; or
n bits of content in predefined content.

In some implementations, the radio link failure includes at least one of: a physical layer out-of-sync, a random access failure, a RLC layer reaching a maximum retransmission count or beam failure.

In some implementations, the SCG change includes any one of:
a change indication sent by the network device for making a change in a plurality of candidate cells; or
a cell configuration change in a case of meeting the network configuration or the protocol.

In some implementations, the SCG change includes a SCG addition or changing a SCG configuration from a source SCG to a target SCG.

In some implementations, the failure processing module 1310 may include:
a report information sending submodule, configured to send report information to the network device through a MCG, in which the report information is used to inform the network device of the SCG connection failure.

In some implementations, the apparatus 1300 may further include:
a MCG recovery module, configured to, in response to the MCG being unavailable, perform a MCG connection recovery operation.

In some implementations, the MCG connection recovery operation includes any one of:
an RRC connection reestablishment;
reestablishment through a candidate MCG configuration; or
reestablishment through a source MCG configuration.

In some implementations, the report information includes at least one of:
a connection failure type;
connection failure configuration indication information;
connection failure cell indication; or
connection failure cell group indication.

In some implementations, the failure processing module 1310 may include:
a reestablishing submodule, configured to reestablish a SCG connection.

In some implementations, the reestablishing submodule may be configured to: reestablish the SCG connection through a candidate SCG configuration, or reestablish the SCG connection through a source SCG configuration.

The embodiment of the disclosure stipulates that when it is determined that the SCG connection fails, the disclosure can perform the SCG connection failure processing operation according to the network configuration or the protocol, to reduce interruptions and packet losses during data transmission and reception.

FIG. 16 is a block diagram illustrating a processing apparatus 1400 after connection failure according to some embodiments. As illustrated in FIG. 16, the apparatus 1400 is applied to a network device. The apparatus 1400 includes: a sending module 1410.

The sending module 1410 is configured to send a network configuration to a terminal, in which the network configuration is used for performing a SCG connection failure processing operation in a case of a SCG connection failure of the terminal.

In some implementations, the network configuration includes connection failure detection configuration information, and the connection failure detection configuration information is used to assist the terminal to determine whether the SCG connection fails.

In some implementations, the apparatus 1400 may further include:
a change indication sending module, configured to send a change indication to the terminal, in which the change indication is used for indicating the terminal to perform a SCG change.

In some implementations, the apparatus 1400 may further include:
a feedback information receiving module, configured to receive feedback information from the terminal, in which the feedback information is a feedback to the change indication.

In some implementations, the apparatus 1400 may further include:
a configuration information sending module, configured to send first configuration information to the terminal.

In some implementations, the first configuration information includes any one of:
a new target MCG configuration indication or a new SCG configuration indication;
a SCG deletion indication; or
an RRC connection release indication.

In some implementations, the apparatus 1400 may further include:
a first feedback information sending module, configured to send feedback information indicating successful random access process to the terminal; or
a second feedback information sending module, configured to send feedback information indicating accessing the target SCG successfully to the terminal; or
a downlink data sending module, configured to send a downlink data transmission to the terminal; or
a new transmission data sending module, configured to send a new transmission scheduled by the network device to the terminal.

In an embodiment of the disclosure, the network device can send the network configuration to the terminal, which can be used to perform the SCG connection failure processing operation in response to the SCG connection failure of the terminal, to reduce interruptions and packet losses during data transmission and reception.

With regard to the apparatus in the above embodiment, the specific way in which each module performs an operation has been described in detail in the method embodiments, which will not be described in detail here.

The disclosure also provides a computer readable storage medium having computer program instructions stored thereon. When the program instructions are executed by a processor, the steps of the methods provided by the disclosure are implemented.

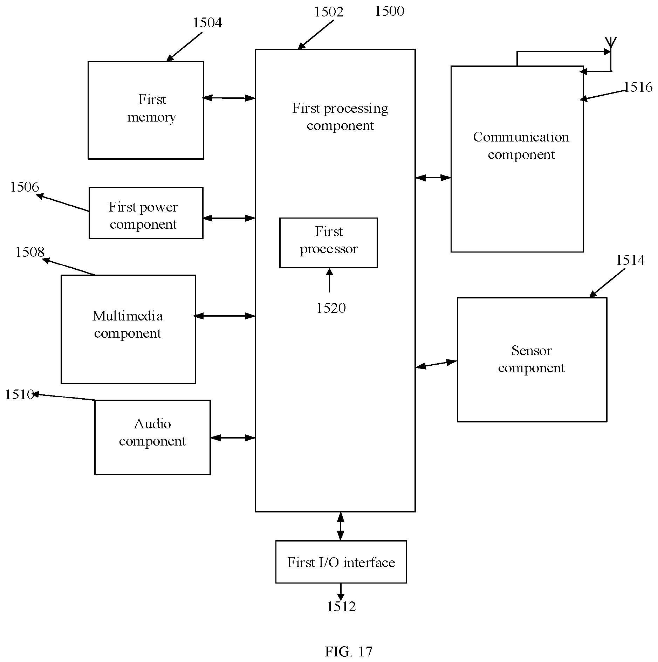

FIG. 17 is a block diagram illustrating a terminal 1500 according to some embodiments. For example, the terminal 1500 may be a mobile phone, a computer, a digital broadcasting terminal, a message transceiver device, a game console, a tablet device, a medical device, a fitness device, a personal digital assistant or a smart car.

As illustrated in FIG. 17, the terminal 1500 may include one or more of the following components: a first processing component 1502, a first memory 1504, a first power component 1506, a multimedia component 1508, an audio component 1510, a first input/output (I/O) interface 1512, a sensor component 1514, and a communication component 1516.

The first processing component 1502 typically controls overall operations of the terminal 1500, such as the operations associated with display, telephone calls, data communications, camera operations, and recording operations. The first processing component 1502 may include one or more first processors 1520 to perform all or part of the steps in the above described methods. Moreover, the first processing component 1502 may include one or more modules which facilitate the first processing component 1502 to interact with other components. For example, the first processing component 1502 may include a multimedia module to facilitate the first processing component 1502 to interact with the multimedia component 1508.

The first memory 1504 is configured to store various types of data to support the operation of the terminal 1500. Examples of such data include instructions for any applications or methods operated on the terminal 1500, contact data, phonebook data, messages, pictures, videos, etc. The first memory 1504 may be implemented using any type of volatile or non-volatile memories, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The first power component 1506 provides power to various components of the terminal 1500. The first power component 1506 may include a power management system, one or more power sources, and any other components associated with the generation, management, and distribution of power in the terminal 1500.

The multimedia component 1508 includes a screen providing an output interface between the terminal 1500 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of wakeup time and a pressure associated with the touch or swipe action. In some embodiments, the multimedia component 1508 includes a front-facing camera and/or a rear-facing camera. When the terminal 1500 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1510 is configured to output and/or input audio signals. For example, the audio component 1510 includes a microphone (MIC) configured to receive an external audio signal when the terminal 1500 is in an operation mode, such as a call mode, a recording mode, and a voice recognition mode. The received audio signal may be further stored in the first memory 1504 or transmitted via the communication component 1516. In some embodiments, the audio component 1510 further includes a speaker to output audio signals.

The first I/O interface 1512 provides an interface between the first processing component 1502 and peripheral interface modules, such as a keyboard, a click wheel, buttons, and the like. The buttons may include, but are not limited to, a home button, a volume button, a starting button, and a locking button.

The sensor component 1514 includes one or more sensors to provide status assessments of various aspects of the terminal 1500. For instance, the sensor component 1514 may detect an open/closed status of the terminal 1500, relative positioning of components, e.g., the display and the keypad, of the terminal 1500, a change in position of the terminal 1500 or a component of the terminal 1500, a presence or absence of user contact with the terminal 1500, an orientation or an acceleration/deceleration of the terminal 1500, and a change in temperature of the terminal 1500. The sensor component 1514 may include a proximity sensor configured to detect the presence of nearby objects without any physical contact. The sensor component 1514 may also include a light sensor, such as a Complementary Metal Oxide Semiconductor (CMOS) or Charge-Coupled Device (CCD) image sensor, for use in imaging applications. In some embodiments, the sensor component 1514 may also include an accelerometer sensor, a gyroscope sensor, a magnetic sensor, a pressure sensor, or a temperature sensor.

The communication component 1516 is configured to facilitate communication, wired or wirelessly, between the terminal 1500 and other devices. The terminal 1500 can access a wireless network based on a communication standard, such as Wi-Fi, 2G or 3G, or a combination thereof. In an exemplary embodiment, the communication component 1516 receives a broadcast signal or broadcast associated information from an external broadcast management system via a broadcast channel. In an exemplary embodiment, the communication component 1516 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In an exemplary embodiment, the terminal 1500 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described methods.

In an exemplary embodiment, a non-transitory computer readable storage medium including instructions is provided, such as the first memory 1504. The above instructions can be executed by the first processor 1520 of the terminal 1500 to complete the above methods. For example, the non-transitory computer readable storage medium may be a ROM, a random access memory (RAM), a CD-ROM, a magnetic tape, a floppy disk or an optical data storage device.

The apparatus may be an independent electronic device or a part of the independent electronic device. For example, in an embodiment, the apparatus may be an integrated circuit (IC) or a chip, in which the IC may be one IC or a collection of multiple ICs. The chip includes, but is not limited to, the following types: a Graphics Processing Unit (GPU), a Central Processing Unit (CPU), a FPGA, a DSP, an ASIC, a System on Chip (SoC), etc. The integrated circuit or chip can be used to execute executable instructions (or codes) to implement the above-mentioned methods. The executable instructions may be stored in the IC or chip, or may be obtained from other devices or apparatuses. For example, the IC or chip includes a processor, a memory, and an interface for communicating with other devices. The executable instruction may be stored in the memory, and when the executable instruction is executed by the processor, the above-mentioned methods are implemented. Alternatively, the IC or chip can receive the executable instruction through the interface and transmit it to the processor for execution, so as to implement the above-mentioned methods.

In another exemplary embodiment, a computer program product is provided. The computer program product includes a computer program executable by a programmable device. The computer program has a code portion for executing the above-mentioned methods when being executed by the programmable device.

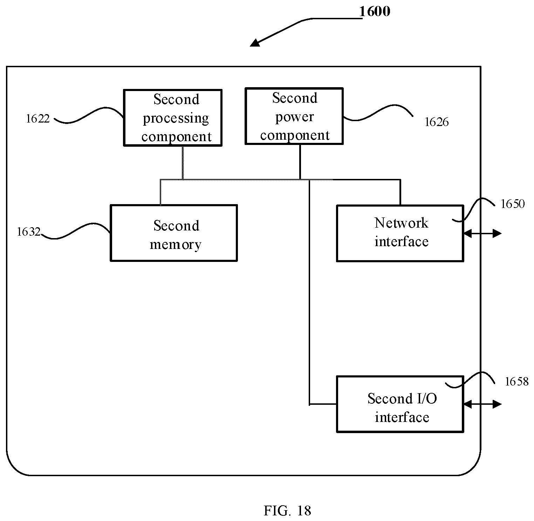

FIG. 18 is a block diagram illustrating a network device 1600 according to an exemplary embodiment. For example, the network device 1600 may be provided as a server. As illustrated in FIG. 18, the network device 1600 includes a second processing component 1622, which further includes one or more processors, and memory resources represented by a second memory 1632 for storing instructions, such as application programs, that can be executed by the second processing component 1622. The application programs stored in the second memory 1632 may include one or more modules each corresponding to a set of instructions. In addition, the second processing component 1622 is configured to execute instructions to perform the methods described above.

The network device 1600 may also include a second power component 1626 configured to perform power management of the network device 1600, a wired or wireless network interface 1650 configured to connect the network device 1600 to a network, and a second I/O interface 1658. The network device 1600 may operate based on an operating system stored in the second memory 1632, such as Windows Server TM, Mac OS XTM, UnixTM, LinuxTM, FreeBSDTM, or the like.

Other schemes of the disclosure will be apparent to those skilled in the art from consideration of the specification and the practice of the disclosure disclosed here. The disclosure is intended to cover any variations, usages, or adaptations of the disclosure following the general principles thereof and including such departures from the disclosure as come within known or customary practice in the art. It is intended that the specification and embodiments are considered as exemplary only, with a true scope and spirit of the disclosure being indicated by the attached claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the attached claims.

## Claims

1. A processing method after connection failure, performed by a terminal, comprising:
in response to a secondary cell group (SCG) connection failure, performing a SCG connection failure processing operation according to a network configuration or a protocol.

2. The method of claim 1, further comprising:
receiving the network configuration from a network device, wherein the network configuration comprises connection failure detection configuration information; and
determining whether the SCG connection fails based on the connection failure detection configuration information.

3. The method of claim 1, wherein the SCG connection failure comprises at least one of:
a radio link failure; or
a SCG change failure.

4. The method of claim 3, wherein a condition of the SCG change failure comprises timeout of a timer specified in the network configuration or the protocol.

5. The method of claim 4, wherein a starting condition of the timer comprises any one of:
receiving a change indication sent by a network device, and changing a SCG configuration based on the change indication;
receiving a change indication sent by a network device, and sending feedback information to the network device, wherein the feedback information is a feedback to the change indication;
receiving a change indication sent by a network device, and releasing a source SCG; or
a trigger condition specified in the network configuration or the protocol being met.

6. The method of claim 5, wherein the change indication is used to indicate a target SCG configuration in one or more pre-configured SCG configurations.

7. The method of claim 5, wherein the feedback information comprises at least one of HARQ feedback, MAC CE feedback or RRC message feedback.

8. The method of claim 4, wherein a stop of the timer indicates that a SCG change is successful, and a stop condition of the timer comprises any one of:
receiving first configuration information sent by a network device; or
accessing a target SCG successfully.

9. The method of claim 8, wherein the first configuration information comprises any one of:
a new target master cell group (MCG) configuration or a new target SCG configuration;
a SCG deletion indication; or
an RRC connection release indication.

10. The method of claim 8, wherein a judgment condition for accessing the target SCG successfully comprises any one of:
receiving feedback information sent by the network device indicating successful random access process;
receiving feedback information sent by the network device indicating accessing the target SCG successfully;
receiving a downlink data transmission sent by the network device; or
receiving a new transmission scheduled by the network device.

11. The method of claim 10, wherein the new transmission scheduled by the network device comprises at least one of:
an uplink transmission and/or a downlink transmission; or
a new transmission indicated by an identifier of the terminal.

12. The method of claim 10, wherein the new transmission scheduled by the network device comprises a new data transmission of a HARQ process.

13. The method of claim 10, wherein the feedback information indicating successful random access process or the feedback information indicating accessing the target SCG successfully is transmitted through a MAC CE or an RRC message.

14. The method of claim 13, wherein the MAC CE comprises any one of:
a MAC subheader;
n bits of content in a first MAC PDU sent by the terminal in a target cell; and
n bits of content in predefined content.

15. The method of any one of claims 3-14, wherein the radio link failure comprises at least one of: a physical layer out-of-sync, a random access failure, a RLC layer reaching a maximum retransmission count or beam failure.

16. The method of any one of claims 3-14, wherein the SCG change comprises any one of:
a change indication sent by the network device for making a change in a plurality of candidate cells; or
a cell configuration change in a case of meeting the network configuration or the protocol.

17. The method of any one of claims 3-14, wherein the SCG change comprises a SCG addition or changing a SCG configuration from a source SCG to a target SCG.

18. The method of any one of claims 1-14, wherein performing the SCG connection failure processing operation comprises:
sending report information to a network device through a MCG, wherein the report information is used to inform the network device of the SCG connection failure.

19. The method of claim 18, further comprising:
in response to the MCG being unavailable, performing a MCG connection recovery operation.

20. The method of claim 19, wherein the MCG connection recovery operation comprises any one of:
an RRC connection reestablishment;
reestablishment through a candidate MCG configuration; and
reestablishment through a source MCG configuration.

21. The method of claim 18, wherein the report information comprises at least one of:
a connection failure type;
connection failure configuration indication information;
connection failure cell indication; or
connection failure cell group indication.

22. The method of any one of claims 1-14, wherein performing the SCG connection failure processing operation further comprises:
reestablishing a SCG connection.

23. The method of claim 22, wherein reestablishing the SCG connection comprises:
reestablishing the SCG connection through a candidate SCG configuration; or
reestablishing the SCG connection through a source SCG configuration.

24. A processing method after connection failure, performed by a network device, comprising:
sending a network configuration to a terminal, wherein the network configuration is used for performing a secondary cell group (SCG) connection failure processing operation in a case of a SCG connection failure of the terminal.

25. The method of claim 24, wherein the network configuration comprises connection failure detection configuration information, and the connection failure detection configuration information is used to assist the terminal to determine whether a SCG connection fails.

26. The method of claim 25, further comprising:
sending a change indication to the terminal, wherein the change indication is used for indicating the terminal to perform a SCG change.

27. The method of claim 26, further comprising:
receiving feedback information from the terminal, wherein the feedback information is a feedback to the change indication.

28. The method of claim 24, further comprising:
sending first configuration information to the terminal.

29. The method of claim 28, wherein the first configuration information comprises any one of:
indicating a new target MCG configuration or a new SCG configuration;
indicating to delete a SCG; or
indicating to release an RRC connection.

30. The method of claim 24, further comprising:
sending feedback information to the terminal indicating successful random access process;
sending feedback information to the terminal indicating successful access to a target SCG;
sending a downlink data transmission to the terminal; or
sending a new transmission scheduled by the network device to the terminal.

31. A processing apparatus after connection failure, applied to a terminal, comprising:
a failure processing module, configured to, in response to a secondary cell group (SCG) connection failure, perform a SCG connection failure processing operation according to a network configuration or a protocol.

32. A processing apparatus after connection failure, applied to a network device, comprising:
a sending module, configured to send a network configuration to a terminal, wherein the network configuration is used for performing a secondary cell group (SCG) connection failure processing operation in a case of a SCG connection failure of the terminal.

33. A terminal, comprising:
a processor; and
a memory for storing instructions executable by the processor;
wherein the processor is configured to execute the executable instructions to implement the method of any one of claims 1-23.

34. A network device, comprising:
a processor; and
a memory for storing instructions executable by the processor;
wherein the processor is configured to execute the executable instructions to implement the method of any one of claims 24-30.

35. A computer readable storage medium having computer program instructions stored thereon, wherein when the program instructions are executed by a processor, the steps of the method of any one of claims 1-30 are implemented.
